# EUROPEAN PATENT APPLICATION

(11) **EP 3 748 415 A1**
(43) Date of publication of application: **09.12.2020**
(21) Application number: 18904437.3
(22) Date of filing: 31.01.2018
(51) Int. Cl.: G02B 23/00, G02B 7/04, G02B 7/06, G02B 23/18

(54) **OPTICAL EQUIPMENT, BINOCULARS, EYE PAD STRUCTURE, AND METHOD FOR MOVING EYE PAD MEMBER**

(71) Applicant: Nikon Vision Co., Ltd., Tokyo 142-0043 (JP)
(72) Inventor: YOKOI, Youichi, Tokyo 142-0043 (JP)
(74) Representative: Viering, Jentschura & Partner mbB Patent- und Rechtsanwälte
(86) International application number: PCT/JP2018/003135
(87) International publication number: WO 2019/150472

(57) **Abstract**

[Means to Solve Problem] An optical instrument comprising: an optical system which forms a target object image; a magnification changer which changes a magnification of the target object image; an eyecup member; and an eyecup driver which causes the eyecup member to move in association with alteration of the magnification of the target object image made by the magnification changer.

## Description

### Technical Field

The present invention relates to an optical instrument, binoculars, an eyecup structure, and a method for moving an eyecup member.

### Background Art

In optical instruments such as binoculars and telescopes, an eyecup member is provided on a cylindrical member which holds eyepiece lenses. When an observer looks into the eyepiece lenses, the eyecup members come in contact with regions around eyes on the facial surface if the observer uses naked eyes, and the eyecup members come in contact with the front of eyeglasses if the observer wears the eyeglasses.

The eyecup member can move in the optical axis direction of the optical instrument. By moving the eyecup member in the optical axis direction, the position of the eye when the observer looks into the eyepiece lenses can be aligned with the eye point. For example, the binoculars disclosed in Patent Literature 1 are of a configuration such that an eyecup member is provided in each of left and right lens barrels, and an operation member dedicated to move the eyecups moves the left and right eyecup members in the optical axis direction in association with each other.

### Citation List

### Patent Literature

[Patent Literature 1] Japanese Unexamined Patent Application, First Publication No. 2005-017759

### Summary of Invention

A first aspect of the present invention provides an optical instrument comprising: an optical system which forms a target object image; a magnification changer which changes a magnification of the target object image; an eyecup member; and an eyecup driver which causes the eyecup member to move in association with changes in the magnification of the target object image made by the magnification changer.

A second aspect of the present invention provides binoculars comprising a first lens barrel and a second lens barrel which are connected to each other via a coupler and which each include an optical system which forms a target object image, a magnification changer which changes a magnification of the target object image by the movement of the optical system, an eyecup member, and an eyecup driver which causes the eyecup member to move in association with changes in the magnification of the target object image made by the magnification changer, wherein at least one of the magnification changers provided in the first lens barrel and the second lens barrel has an operation member capable of rotating about an optical axis to change the magnification of the target object image, and wherein the binoculars have a connector which causes the eyecup members of the first lens barrel and the second lens barrel to move in association with each other, on the basis of an operation of changing the magnification of the target object image.

A third aspect of the present invention provides binoculars comprising a first lens barrel and a second lens barrel which are connected to each other via a coupler and which each include an optical system which forms a target object image, an eyecup member, and an eyecup driver which causes the eyecup member to move in association with alteration of a magnification of the target object image made by the movement of the optical system, and; a magnification changer which is provided between the first lens barrel and the second lens barrel and has an operation member capable of rotating about an optical axis of the optical system to change the magnification of the target object image; and a connector which causes the eyecup members of the first lens barrel and the second lens barrel to move in association with each other, on the basis of an operation of changing the magnification of the target object image.

A fourth aspect of the present invention provides an eyecup structure comprising: an eyecup member; and an eyecup driver which causes the eyecup member to move in association with alteration of a magnification of a target object image made by the magnification changer.

A fifth aspect of the present invention provides an eyecup structure comprising: an eyecup member; a magnification changer which changes a magnification of a target object image; and an eyecup driver which causes the eyecup member to move in association with alteration of the magnification of the target object image made by the magnification changer.

A sixth aspect of the present invention provides a method for moving an eyecup member, the method comprising causing the eyecup member to move in association with alteration of a magnification of a target object image.

A seventh aspect of the present invention provides a method for moving an eyecup member, the method comprising causing the eyecup member to move in association with alteration of a magnification of an optical system.

An eighth aspect of the present invention provides a method for moving an eyecup member, the method comprising: specifying a magnification of a target object image; determining a position of an eye cup, on the basis of a specified magnification; and causing the eyecup to move to the determined position.

### Brief Description of the Drawings

Fig. 1 is a diagram showing an example of an eyecup structure according to a first embodiment.
Fig. 2 is a diagram showing an example of the eyecup structure according to the first embodiment.
Fig. 3 is an exploded perspective view showing an example of a main body according to the first embodiment.
Fig. 4 (A) and Fig. 4 (B) are perspective views showing an example of a fixed lens barrel.
Fig. 5 is a perspective view showing another example of a fixed lens barrel.
Fig. 6 (A) and Fig. 6 (B) are perspective views showing an example of a guiding ring according to the first embodiment.
Fig. 7 shows an example of a front lens holder, wherein Fig. 7 (A) is a perspective view and Fig. 7 (B) is a cross-sectional view.
Fig. 8 shows an example of an operation ring, wherein Fig. 8 (A) is a perspective view and Fig. 8 (B) is a cross-sectional view.
Fig. 9 (A) is a perspective view and Fig. 9 (B) is a cross-sectional view, both showing an example of an eyecup member, while Fig. 9 (C) is a perspective view and Fig. 9 (D) is a cross-sectional view, both showing another example of an eyecup member.
Fig. 10 is an exploded view schematically showing a positional relationship between restricting grooves, guiding grooves and a hole, and operation pins and a zoom interlocking pin, in the main body.
Fig. 11 is an exploded view schematically showing a positional relationship between the restricting grooves, the guiding grooves and the hole, and the operation pins and the zoom interlocking pin, in the main body.
Fig. 12 is an exploded view schematically showing a positional relationship between the restricting grooves, the guiding grooves and the hole, and the operation pins and the zoom interlocking pin, in the main body.
Fig. 13 (A) to Fig. 13 (C) are diagrams showing states of an eyecup of the eyecup member moving in an optical axis direction.
Fig. 14 is a diagram showing an example of a monocular and an eyecup structure according to a second embodiment.
Fig. 15 is a diagram showing an example of binoculars according to the second embodiment.
Fig. 16 is a diagram showing an example of binoculars according to a third embodiment as viewed from the optical axis directions.
Fig. 17 is a diagram showing an example of a guiding ring.
Fig. 18 is a diagram showing an operation of the two guiding rings connected via a connector.
Fig. 19 is a diagram showing an example of an eyecup structure according to a fourth embodiment.
Fig. 20 is a diagram showing an example of an eyecup structure according to a fifth embodiment.
Fig. 21 is a diagram showing an example of a microscope according to a sixth embodiment.

### Description of Embodiments

In the eyecup structure disclosed in Patent Literature 1 mentioned above, while the eyecup member can move in the optical axis direction of the optical system, the eyecup member is to be moved independently of changing a magnification. Therefore, every time the magnification of a target object image is changed by the magnification changer, the eyecup member needs to be moved to an appropriate position for that magnification, and adjustment of the position of the eyecup member is troublesome for the user, which is not desirable in terms of usability. The purpose of the present embodiment is to provide an eyecup structure capable of improving usability by moving the eyecup member in association with alteration of a magnification of a target object image or a magnification of an optical system, to thereby eliminate the need for or simplify user adjustment of the position of the eyecup member.

Hereunder, embodiments of the present invention will be described, with reference to the drawings. However, the present invention is not limited to the embodiments described below. It should be noted that, in the drawings, scale is changed as necessary to illustrate the embodiments, such as by enlarging or by emphasizing a part. In the following drawings, an XYZ coordinate system is used where appropriate to describe directions. The Y direction is an optical axis direction, and the Z direction is an up-down direction or a vertical direction. For each of the X direction, the Y direction, and the Z direction, where appropriate, description is made with a definition in which a direction indicated by an arrow is the positive (+) direction (for example, the + X direction) and a direction opposite to the direction indicated by the arrow is the negative (-) direction (for example, the - X direction).

### [First Embodiment]

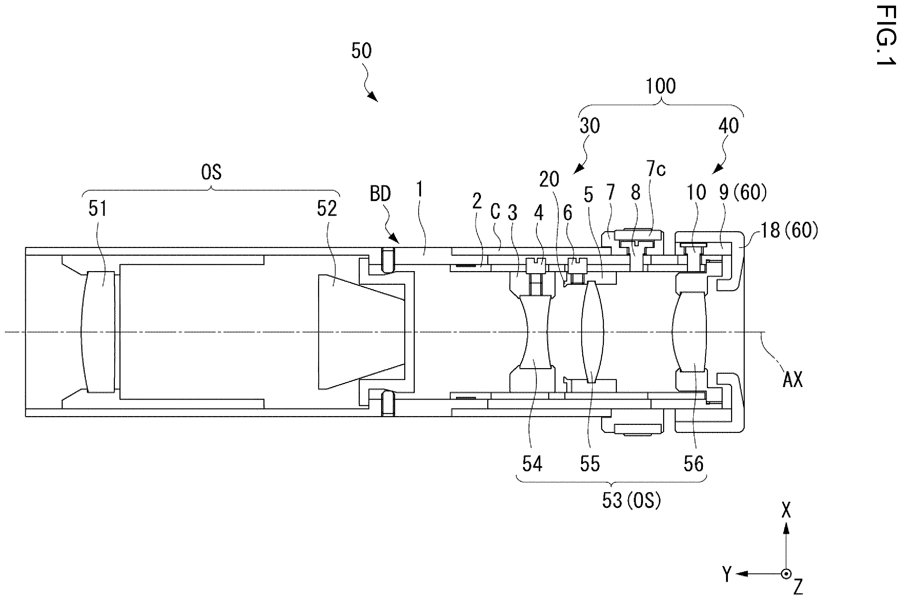

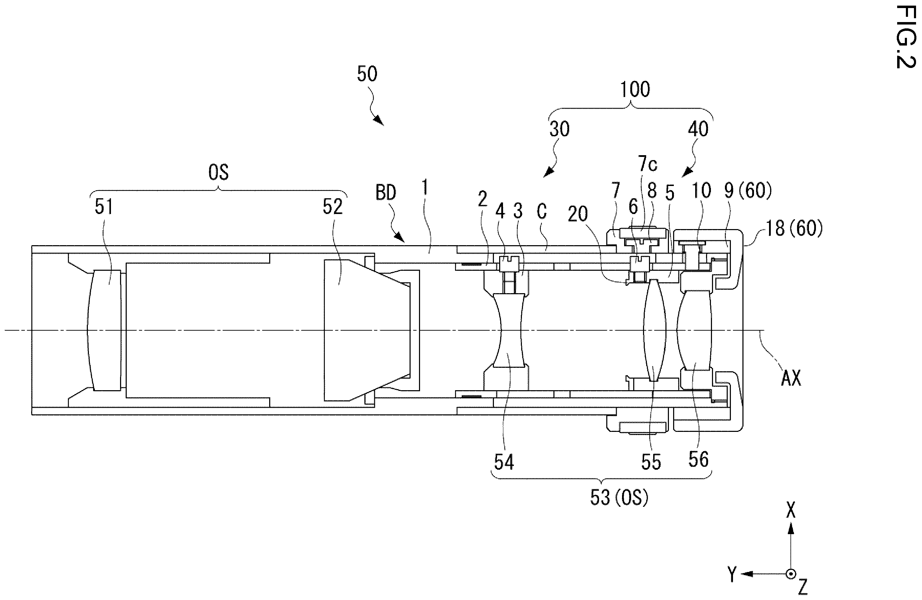

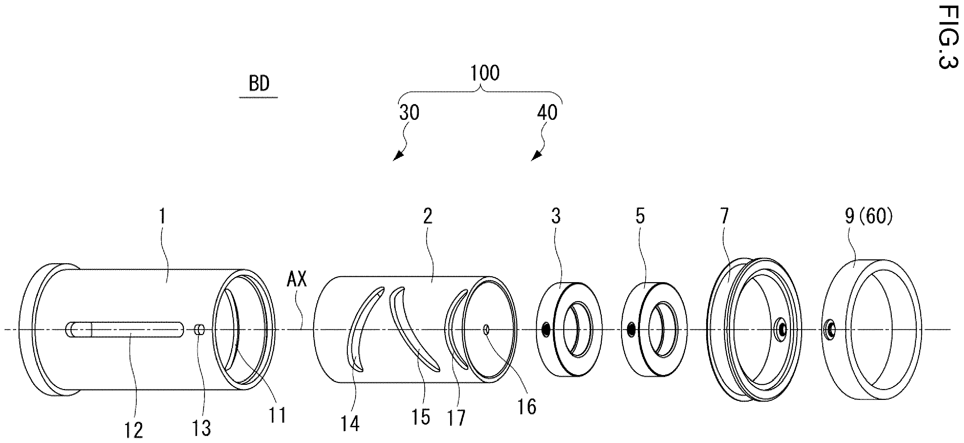

Fig. 1 and Fig. 2 are are diagrams showing an example of an eyecup structure 100 according to a first embodiment. In the first embodiment, the eyecup structure 100 is provided in a monocular 50 serving as an optical instrument. When the monocular 50 is in use, for example, the up-down direction is the Z direction, the + Z direction is the upward direction, and the - Z direction is the downward direction. When the monocular 50 is in use, the left-right direction is the X direction, the left direction is the - X direction, and the right direction is the + X direction. As shown in Fig. 1 and Fig. 2, the monocular 50 has a main body BD and an optical system OS. Fig. 3 is an exploded perspective view showing an example of the main body BD. In Fig. 3, a portion holding the optical system OS in a fixed lens barrel 1 described later is omitted.

As shown in Fig. 1 to Fig. 3, the main body BD has the eyecup structure 100 on the - Y side. The eyecup structure 100 has a magnification changer 30 and an eyecup driver 40. The eyecup driver 40 causes an eyecup member 60 described later to move in association with alteration of the magnification of a target object image made by the magnification changer 30 or changes in the magnification of an optical system OS made by the magnification changer 30. The present embodiment shows a structure in which the eyecup structure 100 includes the magnification changer 30, however, the structure is not limited to this. For example, the magnification changer 30 may be provided in the main body BD separately from the eyecup structure 100.

The present embodiment shows a configuration in which some of the members forming the magnification changer 30 and the members forming the eyecup driver 40 are used commonly. The magnification changer 30 and the eyecup driver 40 include a fixed lens barrel 1, a guiding ring 2, a front lens holder 3, a rear lens holder 5, an operation ring 7, and an eyecup member 60 (an eyecup ring 9, an eyecup 18). Each member constituting the magnification changer 30 and the eyecup driver 40 (the main body BD) is formed of a resin or a metal in a cylindrical shape or an annular shape. The members constituting the magnification changer 30 and the eyecup driver 40 will be described.

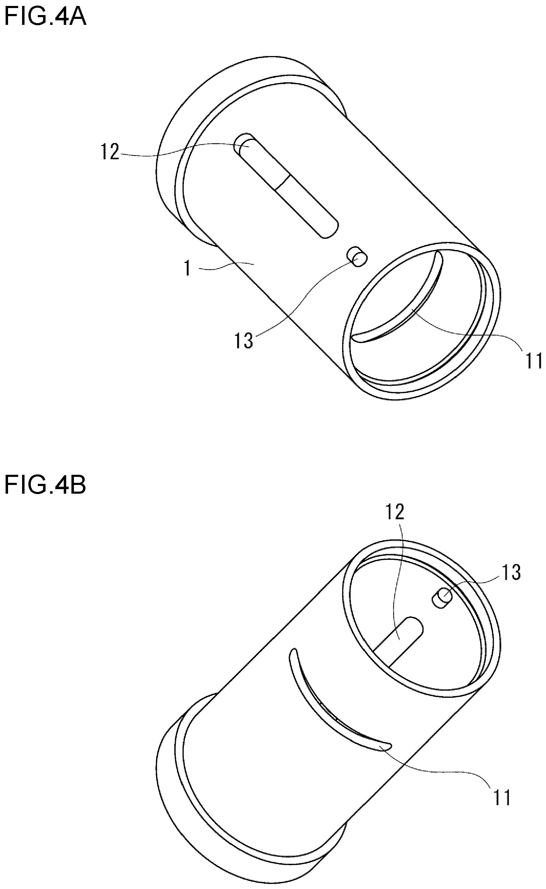

Fig. 4 are perspective views showing an example of the fixed lens barrel 1. As with Fig. 3, in the fixed lens barrel 1 shown in Fig. 4, the portion holding the optical system OS is omitted. The directions of viewing are different between Fig. 4 (A) and Fig. 4(B). As shown in Fig. 4 (A) and Fig. 4 (B), the fixed lens barrel 1 has a restricting groove (a first restricting groove) 11, a restricting groove (a second restricting groove) 12, and a restricting groove (a third restricting groove) 13. The restricting groove 11 is formed along the circumferential direction about an optical axis AX. The length of the restricting groove 11 is, for example, approximately 1/3 of one round around the optical axis AX, however, it is not limited to this length and can be set arbitrarily. The length of the restricting groove 11 defines the amount of rotation the operation ring 7 makes about the optical axis AX. The restricting groove 11 regulates the operation ring 7 described later from moving in the optical axis AX direction.

The restricting groove 12 is provided on a side circumferentially opposite to the restricting groove 11. The restricting groove 12 is formed along the optical axis AX direction (the Y direction). The length of the restricting groove 12 in the Y direction can be set arbitrarily. The restricting groove 12 regulates the front lens holder 3 and the rear lens holder 5 from rotating about the optical axis AX while allowing them to move in the optical axis AX direction. The single restricting groove 12 is commonly used by the front lens holder 3 and the rear lens holder 5. However, a single restricting groove 12 may be separately provided as a restricting groove for the front lens holder 3 and as a restricting groove for the rear lens holder 5.

The restricting groove 13 is provided on a side circumferentially opposite to the restricting groove 11. The restricting groove 13 is formed along the optical axis AX direction (the Y direction). The length of the restricting groove 13 in the Y direction can be set arbitrarily. The restricting groove 13 regulates the eyecup ring 9 from rotating about the optical axis AX while allowing it to move in the optical axis AX direction. The restricting groove 13 is provided on the - Y side (the rear side or the eyecup side) of the restricting groove 12. The restricting groove 12 is longer in the Y direction and wider (wider in the circumferential direction about the optical axis AX) than the restricting groove 13. The restricting groove 12 and the restricting groove 13 are arranged side by side in the Y direction. The restricting groove 12 and the restricting groove 13 may have the same width, and are not limited to being arranged side by side in the Y direction. The restricting groove 12 and the restricting groove 13 are not limited to being provided separately.

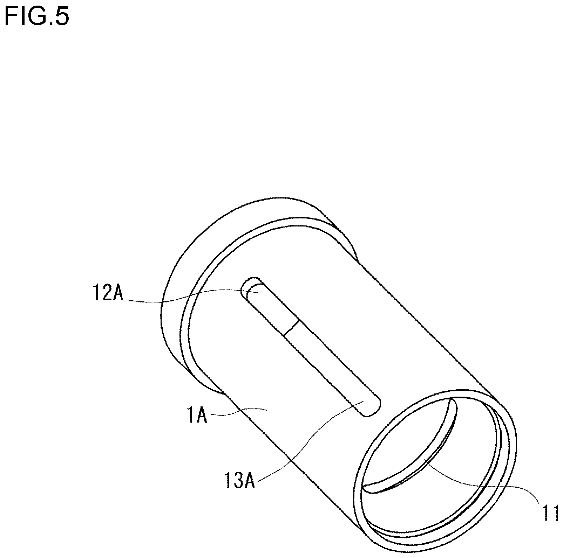

Fig. 5 is a perspective view showing another example of the fixed lens barrel. As with a fixed lens barrel 1A shown in Fig. 5, a restricting groove 12A and a restricting groove 13A may be provided as a single restricting groove formed continuous in parallel with the optical axis AX direction. In such a case, the restricting groove 12A and the restricting groove 13A are such that the ends thereof on the side close to the other restricting groove are connected. The restricting groove 12A and the restricting groove 13A are a single slotted hole provided along the Y direction. In the fixed lens barrel 1A, the restricting groove 11 is similar to that in the fixed lens barrel 1 shown in Fig. 4.

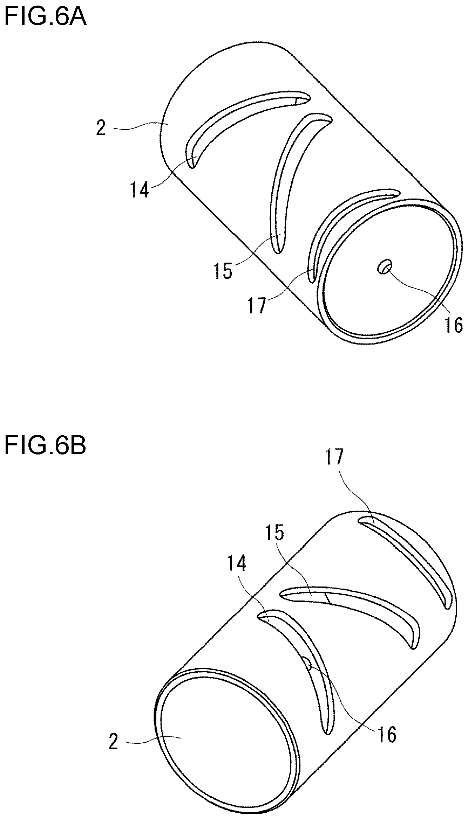

Fig. 6 are perspective views showing an example of the guiding ring 2. The directions of viewing are different between Fig. 6 (A) and Fig. 6(B). As shown in Fig. 6 (A) and Fig. 6 (B), the guiding ring 2 has a guiding groove (a first guiding groove) 14, a guiding groove (a second guiding groove) 15, a hole 16, and a guiding groove (a third guiding groove) 17. The guiding ring 2 is inserted inside the fixed lens barrel 1 and to the - Y side (the rear side or the eyecup side). The length of the guiding ring 2 in the Y direction is shorter than the length of the fixed lens barrel 1 in the Y direction. The guiding ring 2 is inserted into the fixed lens barrel 1 so as to overlap with regions of the fixed lens barrel 1 corresponding to the restricting grooves 11, 12, and 13. The outer diameter of the guiding ring 2 is set substantially equal to or slightly smaller than the inner diameter of the fixed lens barrel 1, and the inner peripheral surface of the fixed lens barrel 1 and the outer peripheral surface of the guiding ring 2 can slide on each other. The guiding ring 2 can rotate about the optical axis AX relative to the fixed lens barrel 1.

The guiding groove 14 is provided on the most + Y side (the front side or the opposite side to the eye cup). The guiding groove 14 is provided inclined relative to the optical axis AX direction (the Y direction) and to the circumferential direction about the optical axis AX. The inclination of the guiding groove 14 may or may not be constant. The guiding groove 14 is formed so as to cover the movable range of the operation pin 4 described later in the Y direction, and cooperates with the restricting groove 12 of the fixed lens barrel 1 to define the position of the front lens holder 3 in the Y direction. The inclination of the guiding groove 14 defines the amount of movement the front lens holder 3 makes in the Y direction with respect to the amount of the rotation when the fixed lens barrel 1 and the guiding ring 2 are rotated relative to each other.

The guiding groove 15 is provided on the - Y side (the rear side or the eyecup side) of the guiding groove 14. The guiding groove 15 is provided inclined relative to the optical axis AX direction (the Y direction) and to the circumferential direction about the optical axis AX. The inclination of the guiding groove 15 may or may not be constant. The guiding groove 15 is formed inclined in a direction opposite to the guiding groove 14. The guiding groove 15 may or may not be symmetrical with the guiding groove 14 about a plane perpendicular to the optical axis AX. The guiding groove 15 is formed so as to cover the movable range of an operation pin 6 described later in the Y direction. The restricting groove 17 is formed so as to cover the movable range of an operation pin 10 described later in the Y direction. The guiding groove 15 cooperates with the restricting groove 12 of the fixed lens barrel 1 to define the position of the rear lens holder 5 in the Y direction. The inclination of the guiding groove 15 defines the amount of movement the rear lens holder 5 makes in the Y direction with respect to the amount of the rotation when the fixed lens barrel 1 and the guiding ring 2 are rotated relative to each other.

When the fixed lens barrel 1 and the guiding ring 2 are rotated relative to each other, the guiding grooves 14, 15 cause the front lens holder 3 and the rear lens holder 5 to move in directions of approaching each other or in directions of separating from each other. Either one of the guiding groove 14 and the guiding groove 15 may be a linear guide groove formed in a direction perpendicular to the optical axis AX direction (that is, the circumferential direction about the optical axis AX). In such a case, the front lens holder 3 or the rear lens holder 5 guided by the linear guiding groove does not move in the Y direction (the optical axis AX direction) even when the fixed lens barrel 1 and the guiding ring 2 are rotated relative to each other.

The hole 16 is provided on the opposite side of the guiding grooves 14, 15, and the guiding groove 17 described later in the circumferential direction about the optical axis AX, however, is not limited to being at this position. The position at which the hole 16 is provided is set in a range overlapping the restricting groove 11 of the fixed lens barrel 1. The hole 16 fixates a zoom interlocking pin 8 described later. Rotation of the operation ring 7 is transmitted to the guiding ring 2 via the zoom interlocking pin 8. The zoom interlocking pin 8 may be fixed to the hole 16 by means of an adhesive agent.

The guiding groove 17 is provided on the - Y side (the rear side or the eyecup side) of the guiding groove 15. The guiding groove 17 is provided on the - Y side (the rear side end portion) of the guiding ring 2. The guiding groove 17 is provided in a curved shape in the peripheral surface of the guiding ring 2. In the present embodiment, the guiding groove 17 is provided in a curved shape, however, it is not limited to having such a shape. For example, the guiding groove 17 may be provided inclined relative to the optical axis AX direction (the Y direction) and to the circumferential direction about the optical axis AX, as with the guiding grooves 14, 15. The guiding groove 17 cooperates with the restricting groove 13 of the fixed lens barrel 1 to define the position of the eyecup member 18 described later in the Y direction.

The guiding groove 17 is formed so as to cover the movable range of an operation pin 10 described later in the Y direction. The restricting groove 13 is formed so as to cover the movable range of an operation pin 10 described later in the Y direction. The restricting groove 13 and the guiding groove 17 are such that the curvature (the inclination in the circumferential direction about the optical axis AX) of the guiding groove 17 defines the amount of movement the eyecup member 18 makes in the Y direction with respect to the amount of the rotation when the fixed lens barrel 1 and the guiding ring 2 are rotated relative to each other. When the fixed lens barrel 1 and the guiding ring 2 are rotated relative to each other, the guiding groove 17 causes the eyecup member 18 to move in the + Y direction (the front side direction) or the - Y direction (the rear side direction).

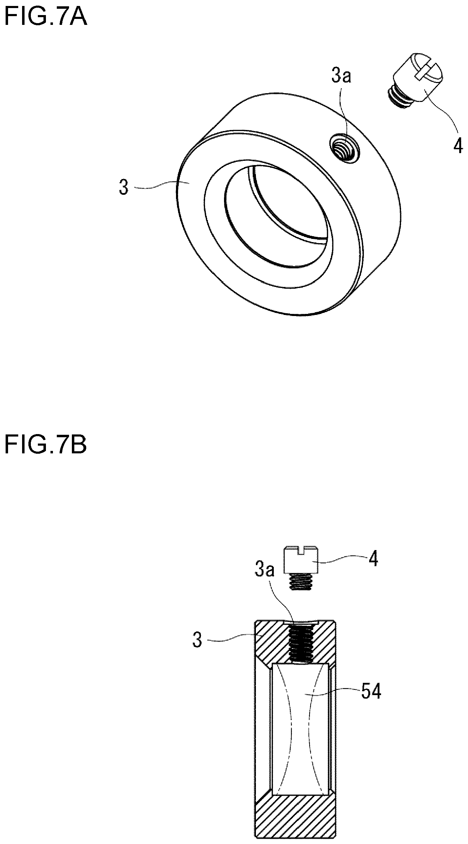

Fig. 7 is a diagram showing an example of the front lens holder 3. Fig. 7 (A) is a perspective view and Fig. 7 (B) is a cross-sectional view. As shown in Fig. 7 (A) and Fig. 7 (B), the front lens holder 3 is of a cylindrical shape or an annular shape. The front lens holder 3 holds the front lens 54, which is one of eyepiece lenses 53, on the inner peripheral surface thereof. The present embodiment shows an example in which the front lens 54 is a concave lens. However, the front lens 54 is not limited to being a concave lens, and may be a convex lens or a parallel flat plate, for example.

A groove capable of holding the front lens 54 is provided in the inner peripheral surface of the front lens holder 3 in the circumferential direction about the optical axis AX. By fitting the front lens 54 into this groove, the front lens 54 is held by the front lens holder 3. The inner diameter of the front lens holder 3 is appropriately set according to the outer diameter of the front lens 54. The configuration for the front lens holder 3 to hold the front lens 54 is arbitrary, and the front lens 54 may be held by using an adhesive agent or a fixing screw, for example.

The front lens holder 3 is inserted into the guiding ring 2. The outer diameter of the front lens holder 3 is set substantially equal to or slightly smaller than the inner diameter of the guiding ring 2, and the inner peripheral surface of the guiding ring 2 and the outer peripheral surface of the front lens holder 3 can slide on each other. The front lens holder 3 can move relative to the guiding ring 2 in the optical axis AX direction. The front lens holder 3 has a screw hole 3a for fixing the operation pin (the first operation pin) 4. The operation pin 4 fixed in the screw hole 3a is held in a state of projecting from the outer peripheral surface of the front lens holder 3. The operation pin 4 has an outer diameter which allows insertion thereof into the guiding groove 14 of the guiding ring 2 and the restricting groove 12 of the fixed lens barrel 1. In the state where the front lens holder 3 is arranged within the guiding ring 2, the operation pin 4 penetrates through the guiding groove 14 and is inserted in the restricting groove 12.

As with the front lens holder 3, the rear lens holder 5 is of a cylindrical shape or an annular shape. Reference should be made to Fig. 1 to Fig. 3 regarding the rear lens holder 5, and a perspective view and so forth thereof are omitted. The rear lens holder 5 holds the rear lens 55, which is one of eyepiece lenses 53, on the inner peripheral surface thereof. The present embodiment shows an example in which the rear lens 55 is a convex lens. However, the rear lens 55 is not limited to being a convex lens, and may be a concave lens or a parallel flat plate, for example.

A groove capable of holding the rear lens 55 is provided in the inner peripheral surface of the rear lens holder 5 in the circumferential direction about the optical axis AX. By fitting the rear lens 55 into this groove, the rear lens 55 is held by the rear lens holder 5. The inner diameter of the rear lens holder 5 is appropriately set according to the outer diameter of the rear lens 55. The configuration for the rear lens holder 5 to hold the rear lens 55 is arbitrary, and the rear lens 55 may be held by using an adhesive agent or a fixing screw, for example.

The rear lens holder 5 is inserted into the guiding ring 2. The outer diameter of the rear lens holder 5 is set substantially equal to or slightly smaller than the inner diameter of the guiding ring 2, and the inner peripheral surface of the guiding ring 2 and the outer peripheral surface of the rear lens holder 5 can slide on each other. The rear lens holder 5 can move relative to the guiding ring 2 in the optical axis AX direction. The outer diameter of the rear lens holder 5 is the same as the outer diameter of the front lens holder 3, however, these diameters may be different from each other.

The rear lens holder 5 has a screw hole 5a for fixing the operation pin (the second operation pin) 6. The shape of the operation pin 6 may be the same as or different from that of the operation pin 4 described above. The operation pin 6 fixed in the screw hole 5a is held in a state of projecting from the outer peripheral surface of the rear lens holder 5. The operation pin 6 has an outer diameter which allows insertion thereof into the guiding groove 15 of the guiding ring 2 and the restricting groove 12 of the fixed lens barrel 1. In the state where the rear lens holder 5 is arranged within the guiding ring 2, the operation pin 6 penetrates through the guiding groove 15 and is inserted in the restricting groove 12. On the + Y side of the rear lens holder 5, there is provided a field diaphragm 20. The field diaphragm 20, together with the rear lens holder 5, move in the optical axis AX direction. The field diaphragm 20 may be provided, for example, in a part of the optical path of the optical system OS, instead of being provided on the rear lens holder 5.

The front lens holder 3 and the rear lens holder 5 are held inside the guiding ring 2 so that the principal planes of the front lens 54 and the rear lens 55 are perpendicular to the optical axis AX. As described above, in this state, the operation pin 4 penetrates through the restricting groove 12 and is inserted into the guiding groove 14, and the operation pin 6 penetrates through the restricting groove 15 and is inserted into the guiding groove 12. The height (the length or the projection amount) of the distal ends of the operation pin 4 and the operation pin 6 are set so as not to project outward from the fixed lens barrel 1. A cylindrical cover C is attached to the outer periphery of the fixed lens barrel 1, and the distal ends of the operation pin 4 and the operation pin 6 do not come into contact with this cover C. Therefore, smooth operation of the operation pin 4 and the operation pin 6 is ensured.

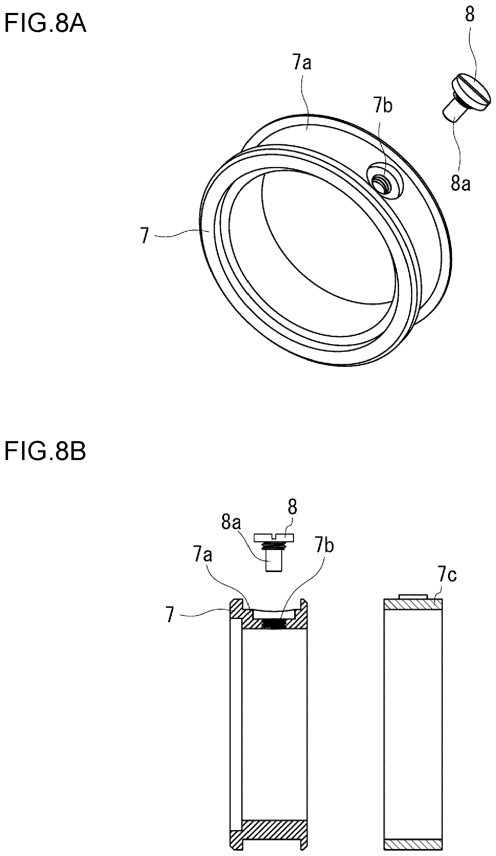

Fig. 8 is a diagram showing an example of the operation ring 7. Fig. 8 (A) is a perspective view and Fig. 7 (B) is a cross-sectional view. As shown in Fig. 8 (A) and Fig. 8 (B), the operation ring 7 has an annular recess 7a, an attachment hole 7b, and a cylindrical cover 7c. The operation ring 7 is provided on the - Y side of the fixed lens barrel 1 so as to project outward from the fixed lens barrel 1. The inner diameter of the operation ring 7 is set the same as or slightly larger than the outer diameter of the fixed lens barrel 1. As a result, the operation ring 7 can slide on the outer peripheral surface of the fixed lens barrel 1 and can rotate about the optical axis AX relative to the fixed lens barrel 1.

The annular recess 7a is provided on the outer peripheral surface of the operation ring 7 in the circumferential direction about the optical axis AX. The attachment hole 7b is provided in a part of the annular recess 7a so as to penetrate through the operation ring 7 from the inside to the outside. The zoom interlocking pin 8 is fixed to the attachment hole 7b by means of screw coupling or the like. The zoom interlocking pin 8 is attached to the attachment hole 7b so that the head thereof does not project outward from the annular recess 7a.

In the state where the zoom interlocking pin 8 is attached to the attachment hole 7b, a distal end 8a of the zoom interlocking pin 8 projects inside the operation ring 7. The distal end 8a penetrates through the restricting groove 11 of the fixed lens barrel 1 and is inserted into the hole 16 of the guiding ring 2. The operation ring 7 is an operation portion to be held and operated by user's hand, for example. When the user or the like rotates the operation ring 7, the guiding ring 2 can be rotated via the zoom interlocking pin 8. The cylindrical cover 7c is made of rubber or soft resin and is provided in an annular shape, and is mounted on the annular recess 7a. The cylindrical cover 7c prevents slippage when the user or the like operates the operation ring 7 with a hand.

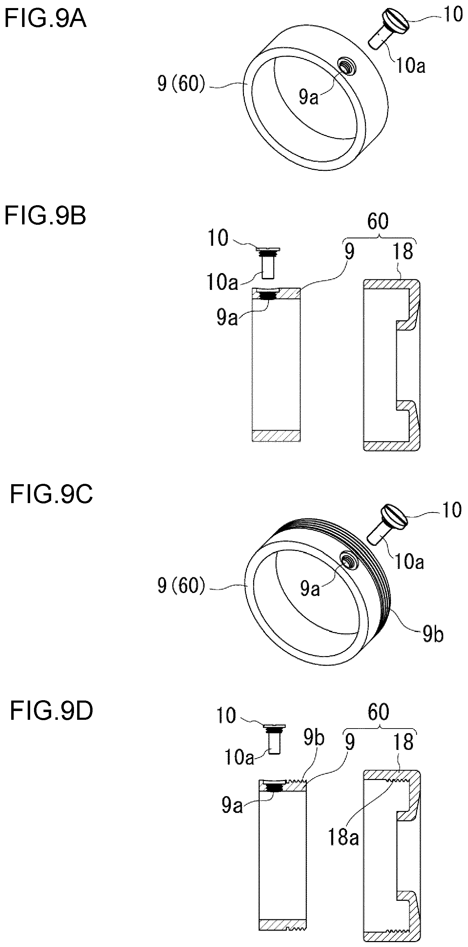

Fig. 9 is a diagram showing an example of the eyecup member 60. Fig. 9 (A) is a perspective view of the eyecup ring 9, and Fig. 7 (B) is a cross-sectional view of the eyecup ring 9 and the eyecup 18. As shown in Fig. 9 (A) and Fig. 9(B), the eyecup member 60 has the eyecup ring 9 (the inner cylindrical body) and the eyecup 18 (the outer cylindrical body). In Fig. 3, the eyecup 18 of the eyecup member 60 is omitted. The inner diameter of the eyecup ring 9 is set the same as or slightly larger than the outer diameter of the fixed lens barrel 1. As a result, the eyecup ring 9 can slide on the outer peripheral surface of the fixed lens barrel 1 and can move in the optical axis AX relative to the fixed lens barrel 1.

The eyecup ring 9 is provided projecting from the - Y side end of the fixed lens barrel 1 to the - Y side. The eyecup ring 9 has an attachment hole 9a for attaching the operation pin (the third operation pin) 10. The attachment hole 9a is provided so as to penetrate through the eyecup ring 9 from the inside to the outside. The operation pin 10 is fixed to the attachment hole 9a by means of screw coupling or the like. The operation pin 10 is attached to the attachment hole 9a so that the head thereof does not project outward from the outer peripheral surface of the eyecup ring 9.

In the state where the operation pin 10 is attached to the attachment hole 9a, a distal end 10a of the operation pin 10 projects inside the eyecup ring 9. The distal end 10a penetrates through the restricting groove 13 of the fixed lens barrel 1 and is inserted into the guiding groove 17 of the guiding ring 2. As the guiding ring 2 rotates, the operation pin 10 moves in the optical axis AX direction by being guided by the guiding groove 17, while rotation thereof in the circumferential direction about the optical axis AX direction is being regulated by the restricting groove 13 of the fixed lens barrel 1. Therefore, the eyecup ring 9 moves in the optical axis AX direction via the operation pin 10 as the guiding ring 2 rotates in the circumferential direction about the optical axis AX. The eyecup ring 9 can be inserted into the eyecup 18. The eyecup 18 is attached so as to cover the eyecup ring 9 from the - Y side of the eyecup ring 9. The eyecup 18 is a portion in which the - Y side end thereof comes in contact with user's facial surface or eyeglasses, and is formed of a resin or the like, for example. In this configuration, by sliding the eyecup 18 relative to the eyecup ring 9 in the optical axis AX direction, the eyecup 18 moves relative to the eyecup ring 9 in the optical axis AX direction.

Fig. 9 (C) is a perspective view showing another example of the eyecup ring 9, and Fig. 9 (D) is a cross-sectional view showing the eyecup ring 9 and the eyecup 18 according to the another example. As shown in Fig. 9 (C) and Fig. 9 (D), a screw thread 9b may be provided on the outer periphery of the eyecup ring 9, and a screw thread 18a may be provided on the inner periphery of the eyecup 18. In such a case, the eyecup ring 9 and the eyecup 18 are attached to each other by means of screw coupling between the screw thread 9b and the screw thread 18a, and the eyecup 18 can be removed from the eyecup ring 9. Since the eyecup ring 9 and the eyecup 18 are screw-coupled, by sliding the eyecup 18 relative to the eyecup ring 9 in the optical axis AX direction, the eyecup 18 moves relative to the eyecup ring 9 in the optical axis AX direction.

As shown in Fig. 1 and Fig. 2, the optical system OS includes an objective lens 51, an erect prism 52, and an eyepiece lenses 53. Light from an observation target object enters the objective lens 51. The objective lens 51 is arranged at the + Y side end of the fixed lens barrel 1, and guides the light from the observation target to the erect prism 52. The erect prism 52 is arranged at the center portion in the Y direction of the fixed lens barrel 1, and guides the light from the objective lens 51 to the eyepiece lenses 53.

The eyepiece lenss 53 include the front lens 54, the rear lens 55, and a fixed lens 56. The front lens 54 is arranged on the front lens holder 3 as described above, and the position thereof in the optical axis AX direction is fixed by the operation pin 4. The rear lens 55 is arranged on the rear lens holder 5 as described above, and the position thereof in the optical axis AX direction is fixed by the operation pin 6. The fixed lens 56 is fixed on the - Y side of the fixed lens barrel 1. The front lens 54 and the rear lens 55 are movable in the optical axis AX direction of the optical system OS. The magnification changer 30 changes the magnification of a target object image or the magnification of the optical system OS by causing the front lens 54 and the rear lens 55 to move in the optical axis AX direction.

The eyecup structure 100 has the magnification changer 30 which causes the front lens 54 and the rear lens 55 to move in the optical axis AX direction, and the eyecup driver 40 which causes the eyecup member 60 to move in the optical axis AX direction. The magnification changer 30 includes the fixed lens barrel 1, the guiding ring 2, the front lens holder 3, the rear lens holder 5, and the operation ring 7 mentioned above. The eyecup driver 40 includes the fixed lens barrel 1, the guiding ring 2, and the operation ring 60 mentioned above. The magnification changer 30 and an eyecup driver 40 share the fixed lens barrel 1 and the guiding ring 2. Hereunder, operations of the magnification changer 30 and the eyecup driver 40 will be described.

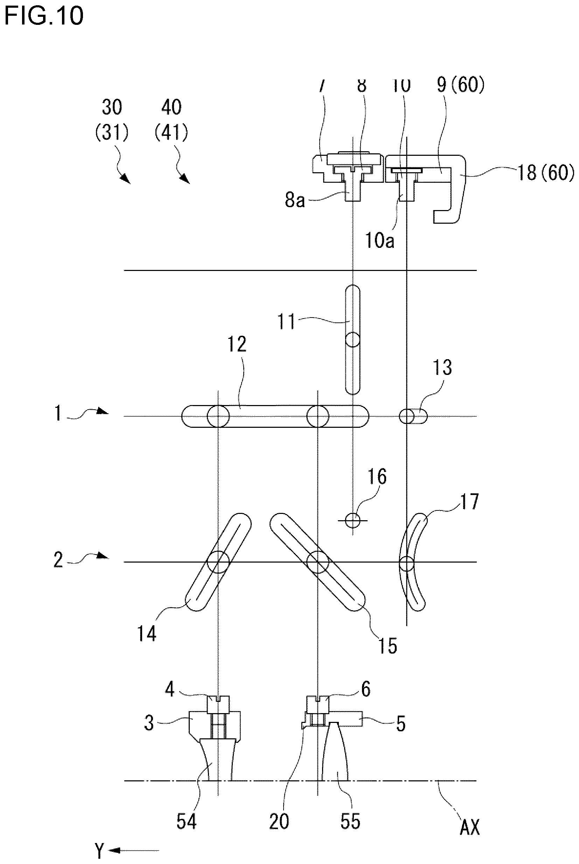

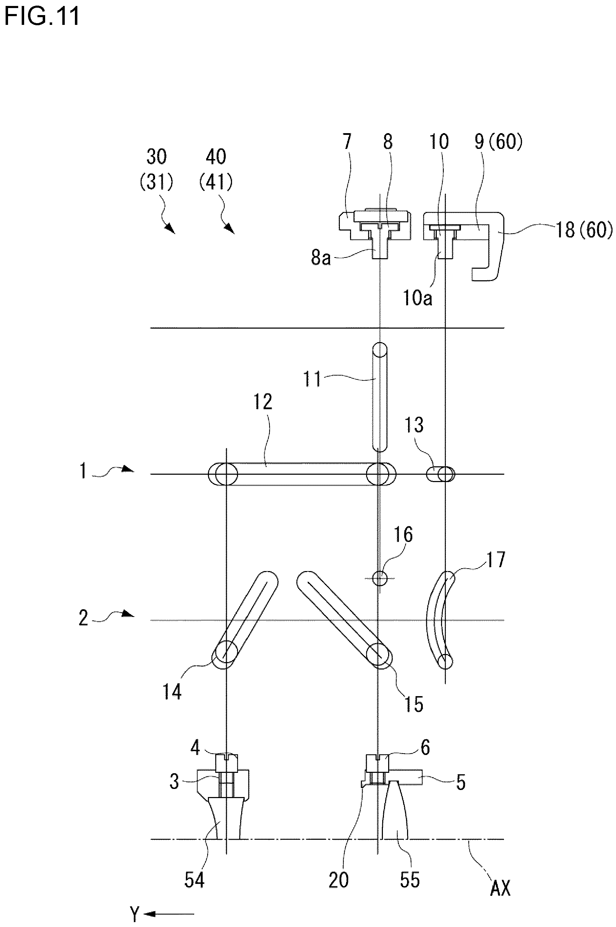

Fig. 10 to Fig. 12 are exploded views schematically showing a positional relationship between the restricting grooves 11, 12, 13, the guiding grooves 14, 15, 17, and the hole 16, the operation pins 4, 6, 10, and the zoom interlocking pin 8, in the magnification changer 30 and the eyecup driver 40. Fig. 10 shows a state where the front lens 54 and the rear lens 55 are all arranged substantially at the center in the optical axis AX direction. From this state, for example, by rotating the operation ring 7 in a first rotation direction, which is one of directions about the optical axis AX, the distal end 8a of the zoom interlocking pin 8 moves along the restricting groove 11 in the upward direction of Fig. 11, as shown in Fig. 11.

Since the distal end 8a is inserted in the hole 16 of the guiding ring 2, the movement of the distal end 8a causes the guiding ring 2 to follow the distal end 8a and rotate in the first rotation direction. Since the distal end 8a is inserted in the restricting groove 11, the movement of the guiding ring 2 in the optical axis AX direction is regulated. The rotation of the guiding ring 2 in the first rotation direction causes the guiding grooves 14, 15, 17 to rotate in the first rotation direction. The rotation of the guiding grooves 14, 15, 17 causes the operation pins 4, 6, 10 inserted in the guiding grooves 14, 15, 17 to move in the optical axis AX direction while being guided by the guiding grooves 14, 15, 17.

The inclinations of the guiding groove 14 and the guiding groove 15 are set in opposite directions. Accordingly, the movement of the operation pins 4, 6 causes the front lens holder 3 and the rear lens holder 5 to move in the opposite directions along the optical axis AX direction. In the case shown in Fig. 11, the operation pin 4 causes the front lens holder 3 to move forward in the optical axis AX direction (in the + Y direction), and the rear lens holder 5 to move backward in the optical axis AX direction (in the - Y direction).

The movement of the front lens holder 3 and the rear lens holder 5 causes the front lens 54 to move forward in the optical axis AX direction (in the + Y direction), and the rear lens 55 to move backward in the optical axis AX direction (in the - Y direction). As a result, the magnification of a target object image or the magnification of the optical system OS is changed. The movement of the operation pin 10 causes the eyecup ring 9 to move backward in the optical axis AX direction (in the - Y direction). Along with the movement of the eyecup ring 9, the eyecup 18 (that is, the eyecup member 60) moves backward in the optical axis AX direction (in the - Y direction). The state shown in Fig. 11 corresponds to the state shown in Fig. 2 described above. The operation ring 7 can be rotated until the distal end 8a of the zoom interlocking pin 8 comes in contact with the end (the upper side end in Fig. 11) of the restricting groove 11.

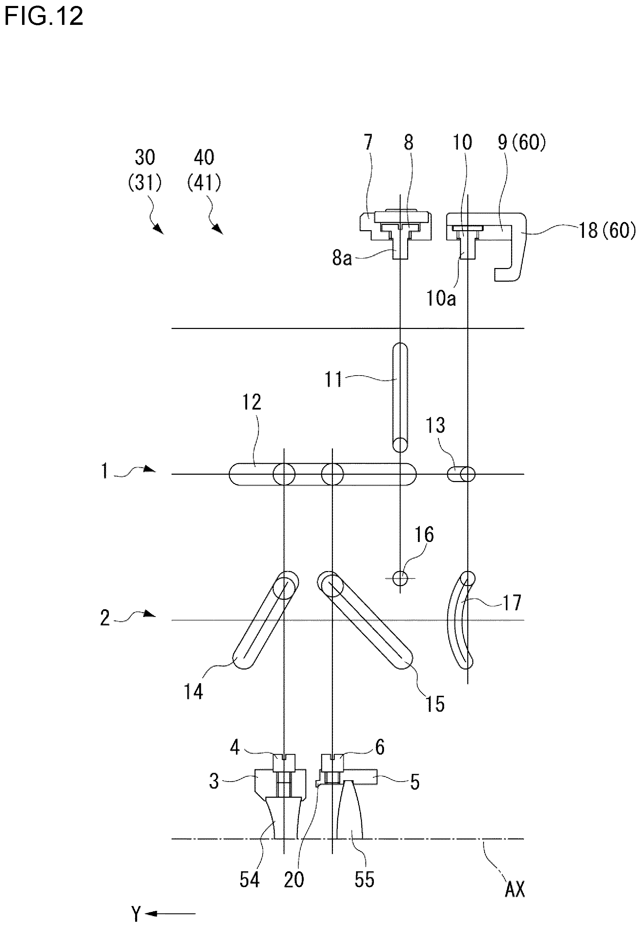

From the state shown in Fig. 10, for example, by rotating the operation ring 7 in a second rotation direction, which is an opposite direction of the first rotation direction about the optical axis AX, the distal end 8a of the zoom interlocking pin 8 moves along the restricting groove 11 in the downward direction in Fig. 11, as shown in Fig. 12. Since the distal end 8a is inserted in the hole 16 of the guiding ring 2, the movement of the distal end 8a causes the guiding ring 2 to follow the distal end 8a and rotate in the second rotation direction. The rotation of the guiding ring 2 causes the guiding grooves 14, 15, 17 to rotate in the second rotation direction. The rotation of the guiding grooves 14, 15, 17 causes the operation pins 4, 6, 10 inserted in the guiding grooves 14, 15, 17 to move in the optical axis AX direction while being guided by the guiding grooves 14, 15, 17. In the case shown in Fig. 12, the front lens holder 3 moves backward in the optical axis AX direction (in the - Y direction), and the rear lens holder 5 moves forward in the optical axis AX direction (in the + Y direction).

The movement of the front lens holder 3 and the rear lens holder 5 causes the front lens 54 to move backward in the optical axis AX direction (in the - Y direction), and the rear lens 55 to move forward in the optical axis AX direction (in the + Y direction). As a result, the magnification of a target object image or the magnification of the optical system OS is changed. The movement of the operation pin 10 causes the eyecup ring 9 to move backward in the optical axis AX direction (in the - Y direction). Along with the movement of the eyecup ring 9, the eyecup 18 (that is, the eyecup member 60) moves backward in the optical axis AX direction (in the - Y direction). In the present embodiment, the eyecup member 60 moves backward in the optical axis AX direction (in the - Y direction), either from the state shown in Fig. 10 to the state shown in Fig. 11 or from the state shown in Fig. 10 to the state shown in Fig. 12. The state shown in Fig. 12 corresponds to the state shown in Fig. 1 described above. The operation ring 7 can be rotated until the distal end 8a of the zoom interlocking pin 8 comes in contact with the end (the lower side end in Fig. 12) of the restricting groove 11.

As described above, by the magnification changer 30 causing the front lens 54 and the rear lens 55 to move in the optical axis AX direction, the magnification of a target object image or the magnification of the optical system OS is changed, and the movement of the eyecup member 60 in the optical axis AX direction caused by the eyecup driver 40 is interlocked therewith. With this configuration, the need for the user to adjust the position of the eyecup member 60 is eliminated when changing magnification, thereby improving usability for the user. The magnification changer 30 has a first rotation-linear motion converter 31 which causes the front lens 54 and the rear lens 55 to move in the optical axis direction by the operation ring 7 being rotated about the optical axis AX. The first rotation-linear motion converter 31 includes the restricting grooves 11, 12 of the fixed lens barrel 1, the guiding grooves 14, 15 and the hole 16 of the guiding ring 2, the front lens holder 3, the rear lens holder 5, the operation pins 4, 6, and the zoom interlocking pin 8.

As described above, the eyecup driver 40 causes the eyecup member 60 to move in association with alteration of the magnification of a target object image or the magnification of the optical system OS made by the magnification changer 30. The eyecup driver 40 has a second rotation-linear motion converter 41 which causes the eyecup 18 to move in the optical axis AX direction by means of rotation of the operation ring 7. The second rotation-linear motion converter 41 includes the restricting groove 13 of the fixed lens barrel 1, the guiding groove 17 of the guiding ring 2, the eyecup ring 9, and the operation pin 10. The first rotation-linear motion converter 31 and the second rotation-linear motion converter 41 are not limited to the configuration described above. For example, it is possible to apply any configuration capable of converting the rotation of the operation ring 7 (the guiding ring 2) into the movement of the front lens holder 3, the rear lens holder 5, and the eyecup member 60 in the optical axis AX direction.

The eyecup driver 40 causes the eyecup member 60 (the eyecup ring 9 and the eyecup 18) to move in the optical axis AX direction so as to correspond to an eye relief length determined by the magnification changed by the magnification changer 30. For example, the shape of the guiding groove 17 provided in the guiding ring 2 is set so that the eyecup ring 9 moves so as to correspond to the eye relief length according to the magnification changed by the magnification changer 30. With this configuration, the position of the eyecup member 60 is adjusted to the eye relief length according to the change in the magnification, and usability for the user is improved as a result.

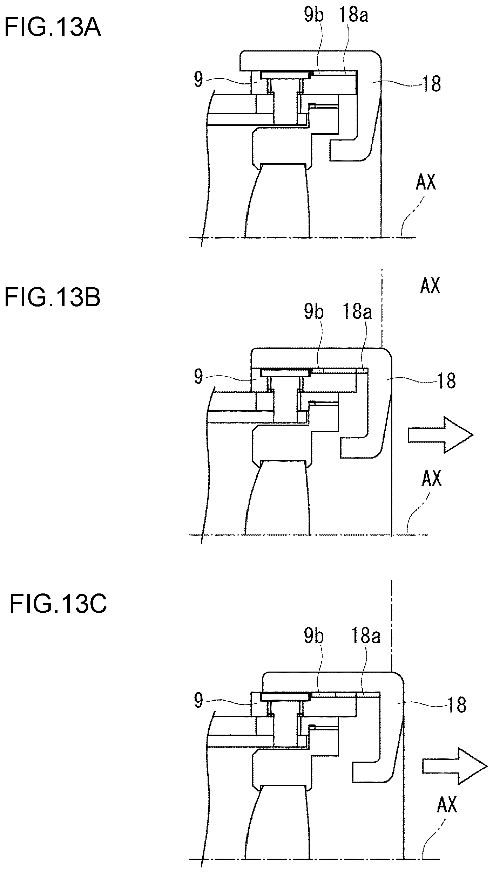

Fig. 13 (A) to Fig. 13 (C) are diagrams showing states of the eyecup 18 of the eyecup member 60 moving relative to the eyecup ring 9 in an optical axis AX direction. When the operation ring 7 rotates about the optical axis AX, the eyecup member 60 is arranged at a predetermined position in the optical axis AX direction according to the rotational position thereof. By finely adjusting the eyecup member 60 in the optical axis AX direction (in the Y direction) from this state, the focal position can be adjusted to the eye of the user. In the eyecup member 60, the screw thread 9b of the eyecup ring 9 and the screw thread 18a of the eyecup 18 are screw-coupled (see Fig. 9 (C), and Fig. 9 (D)). Therefore, as shown in Fig. 13 (A), by rotating, from the state where the eyecup 18 is fully screwed onto the eyecup ring 9, the eyecup 18 in the direction of removing it from the eyecup ring 9, the eyecup 18 can be moved backward relative to the eyecup ring 9 in the optical axis AX direction (in the - Y direction) as shown in Fig. 13 (B).

By further rotating the eyecup 18 in the direction of removing it from the eyecup ring 9, the eyecup 18 can be further moved backward relative to the eyecup ring 9 in the optical axis AX direction (in the - Y direction) as shown in Fig. 13 (C). As described above, the position of the eyecup member 60 is set according to the rotational position of the operation ring 7, however, the eyecup 18 can be further moved backward from the position in the optical axis AX direction (in the - Y direction). This configuration enables the user to make a fine adjustment from the position of the eyecup 18 set according to the magnification, thereby further improving usability for the user.

As described above, the eyecup structure 100 according to the present embodiment has the eyecup driver 40 which causes the eyecup member 60 to move in association with alteration of magnification of a target object image made by the magnification changer 30. Therefore, the eyecup member 60 moves in association with alteration of the magnification of a target object image or the magnification of the optical system OS, and thereby the need for the user to adjust the position of the eyecup member 60 according to the change in magnification is eliminated. As a result, usability for the user can be improved.

### [Second Embodiment]

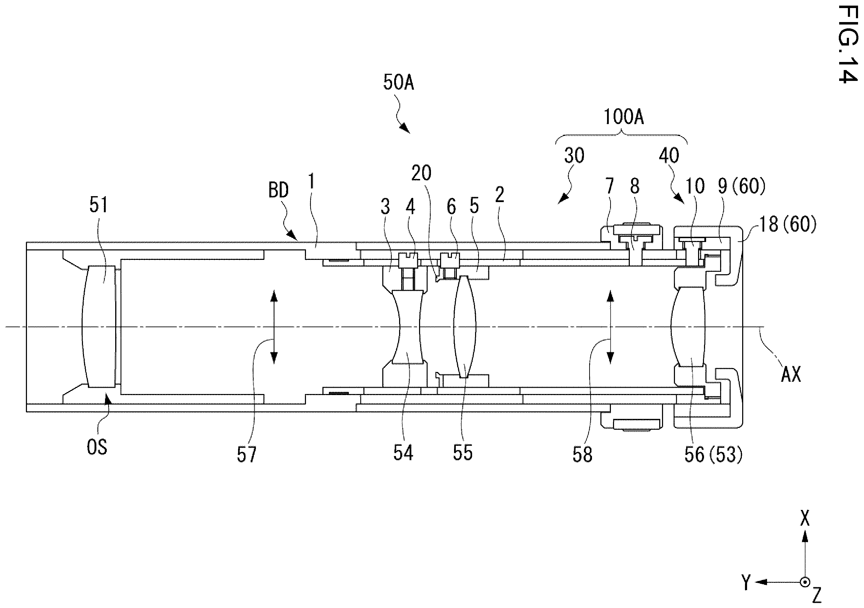

Hereunder, a monocular 50A and an eyecup structure 100A according to a second embodiment will be described. Fig. 14 is a diagram showing an example of the monocular 50A and the eyecup structure 100A according to the second embodiment. In Fig. 14, configurations similar to those in the above embodiment are assigned with the same reference signs and descriptions thereof are omitted or simplified. The monocular 50A (an optical instrument) shown in Fig. 14 does not have the erect prism 52 of the monocular 50 described above, and the front lens 54 and the rear lens 55 are arranged as relay lenses. In the monocular 50A, the fixed lens 56 constitutes the eyepiece lenses 53. The monocular 50A has two focal planes 57, 58 to erect a target object image in the optical system OS. Other configurations of the monocular 50A are similar to those in the monocular 50 described above.

The eyecup structure 100A included in the monocular 50A includes the magnification changer 30 and the eyecup driver 40, as with the eyecup structure 100 of the monocular 50 described above. The magnification changer 30 causes the front lens 54 and the rear lens 55 serving as relay lenses to move in the optical axis AX direction. The eyecup driver 40 causes the eyecup member 60 to move in association with alteration of the magnification made by the magnification changer 30.

As described above, the eyecup structure 100A has the eyecup driver 40 which causes the eyecup member 60 to move in association with alteration of magnification of a target object image or in magnification of the optical system OS made by the magnification changer 30. Therefore, as with the embodiment described above, the need for the user to adjust the position of the eyecup member 60 according to the change in magnification is eliminated. As a result, usability for the user can be improved.

### [Third Embodiment]

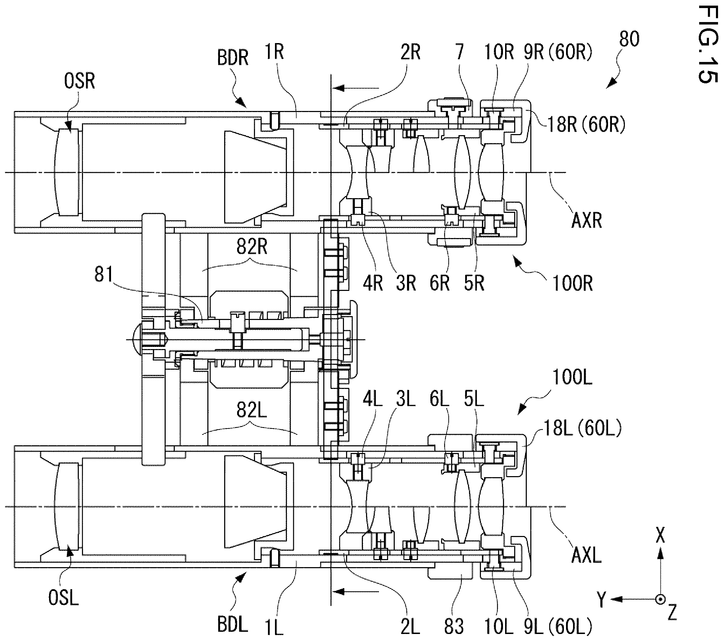

Hereunder, binoculars 80 according to a third embodiment will be described. Fig. 15 is a diagram showing an example of the binoculars 80 according to the third embodiment. When the binoculars 80 are in use, the up-down direction is the Z direction, the + Z direction is the upward direction, and the - Z direction is the downward direction. Also, when the binoculars 80 are in use, the left-right direction is the X direction, the left direction is the - X direction, and the right direction is the + X direction. The binoculars 80 shown in Fig. 15 are binoculars with a magnification changing function. The binoculars 80 have a main body BDR and an optical system OSR for the right eye, and a main body BDL and an optical system OSL for the left eye. The main body BDR for the right eye has an eyecup structure 100R for the right eye. As with the eyecup structure 100 described above, the eyecup structure 100R includes, as the magnification changer 30 and the eyecup driver 40, a fixed lens barrel 1R, a guiding ring 2R, a front lens holder 3R, a rear lens holder 5R, an operation ring 7, and an eyecup member 60R (an eyecup ring 9R and an eyecup 18R). Each part which constitutes the eyecup structure 100R is formed in a cylindrical shape.

The main body BDL for the left eye has an eyecup structure 100L for the left eye. The eyecup structure 100L is of substantially the same configuration as that of the eyecup structure 100R for the right eye. However, the eyecup structure 100L does not have the operation ring 7 and has a decoration ring 83 instead. That is to say, the eyecup structure 100L includes, as the magnification changer 30 and the eyecup driver 40, a fixed lens barrel 1L, a guiding ring 2L, a front lens holder 3L, a rear lens holder 5L, the decoration ring 83, and an eyecup member 60L (an eyecup ring 9L and an eyecup 18L). Each part which constitutes the main body BDL is formed in a cylindrical shape. The fixed lens barrel 1R is connected to an coupler 81 via an arm 82R, and the fixed lens barrel 1L is connected to the coupler 81 via an arm 82L.

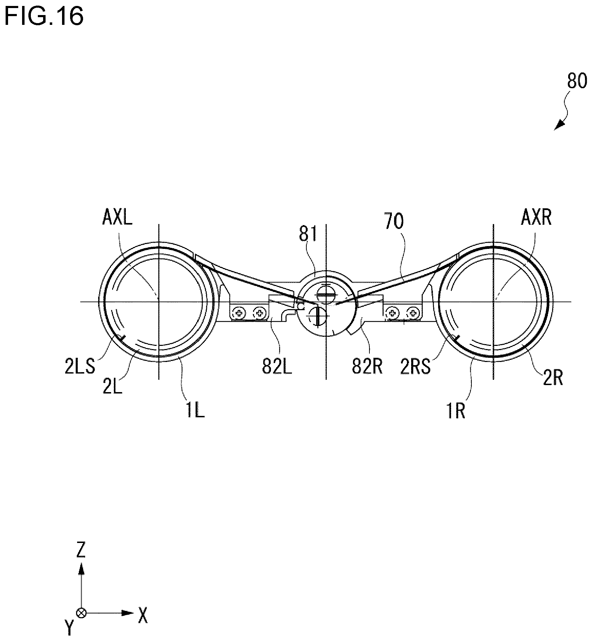

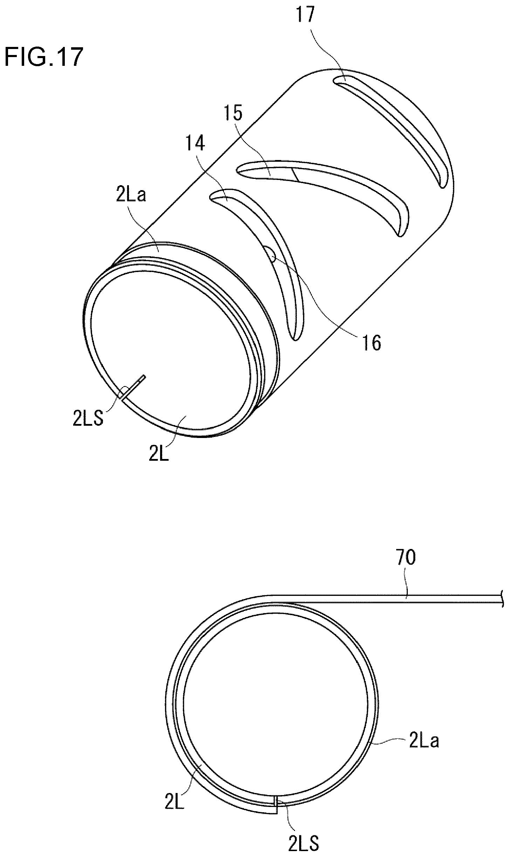

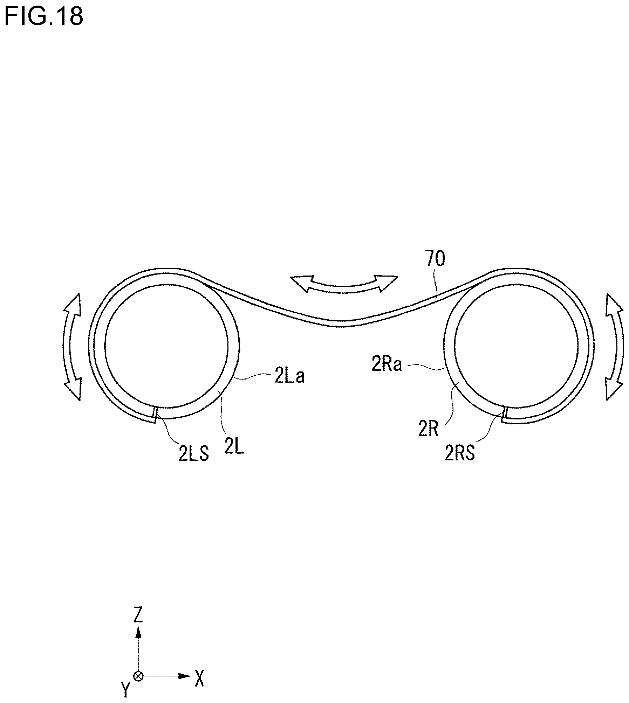

Fig. 16 is a diagram showing an example of the binoculars 80 as viewed from the optical axis directions AXR, AXL. Fig. 17 shows a perspective view of a guiding ring 2L, and a view thereof seen from the optical axis AXL direction. As shown in Fig. 16 and Fig. 17, the guiding ring 2L has a step 2La provided on the outer peripheral surface thereof in the circumferential direction about the optical axis AXL, and a slit 2LS which penetrates from the inside to the outside of the guiding ring 2L is provided in a part of the step 2La. As with the guiding ring 2L, the guiding ring 2L has a step 2Ra (see Fig. 18) provided on the outer peripheral surface thereof in the circumferential direction about the optical axis AXL, and a slit 2RS which penetrates from the inside to the outside of the guiding ring 2R is provided in a part of the step 2Ra. One end of a connector 70 is fixed to the slit 2LS, and the other end of the connector 70 is fixed to the slit 2RS.

The connector 70 is a metal connector formed in a string or strip shape. The connector 70 connects the guiding rings 2L, 2R of the left and right fixed lens barrels 1L, 1R to each other. As shown in Fig. 17, a part of the connector 70 is wound around the step 2La of the guiding ring 2L, and the distal end thereof is interposed and and fixed tightly between the slit 2LS. Similarly, a part of the connector 70 is wound around the step 2Ra of the guiding ring 2R, and the distal end thereof is fixed tightly in the slit 2RS.

Fig. 18 is a diagram showing an operation of the guiding rings 2R, 2L connected via the connector 70. As shown in Fig. 18, in the case where the guiding ring 2R is rotated by the operation ring 7 in the rotation direction about the optical axis AXR, since the end of the connector 70 is fixed in the slit 2RS, the rotation of the guiding ring 2R causes the connector 70 to move in a longitudinal direction (in a direction in which the connector 70 is arranged). Since the end of the connector 70 is fixed in the slit 2LS, the movement of the connector 70 causes the end of the connector 70 to push or pull the guiding ring 2L and rotate about the optical axis AXL. Even in the case where the elasticity of the connector 70 is taken into consideration, when the guiding ring 2R is rotated, the same or substantially the same amount of rotation as that of the guiding ring 2R is transmitted to the guiding ring 2L.

By rotating the operation ring 7 provided on the fixed lens barrel 1R for the right eye, the connector 70 changes both, in an associated manner, the magnification of a target object image or the magnification of the optical system OSR by means of the magnification changer 30 provided in the fixed lens barrel 1R for the right eye and the magnification of a target object image or the magnification of the optical system OSL by means of the magnification changer 30 provided in the eyecup structure 100L for the left eye. When rotating the operation ring 7 to change the magnification of a target object image, the guiding ring 2R rotates about the optical axis AXR, and thereby the guiding ring 2L is also rotated about the optical axis AXL by the connector 70. As a result, in the left and right fixed lens barrels 1L, 1R, the front lens 54L and the rear lens 55L for the left eye and the front lens 54R and the rear lens 55R for the right eye move in association with each other, and the magnifications on left and right are changed simultaneously. The eyecup members 60R, 60L respectively move in the directions of the optical axes AXR, AXL in accordance with the change in the magnification (in accordance with the rotation of the guiding rings 2R, 2L). The configuration in which the eyecup members 60R, 60L move is similar to that in the above embodiment.

As described above, according to the binoculars 80 of the present embodiment, in the left and right eyecup structures 100L, 100R, by operating the operation ring 7 provided on one eyecup structure 100, the magnification of a target object image or the magnification of the optical systems OSL, OSR can be changed in the magnification changer 30 on both sides simultaneously or almost simultaneously, and the left and right eyecup members 60R, 60L can be moved in association with the alteration of the magnification.

In the embodiment described above, the operation ring 7 is provided in the eyecup structure 100R. However, instead of this configuration, the operation ring 7 may be provided in the eyecup structure 100L, or the operation ring 7 may be provided in both the eyecup structures 100L, 100R. Rotation transmission between the guiding ring 2L and the guiding ring 2R is not limited to being performed by the connector 70. For example, a gear train may be used to transmit rotation between the guiding ring 2L and the guiding ring 2R.

### [Fourth Embodiment]

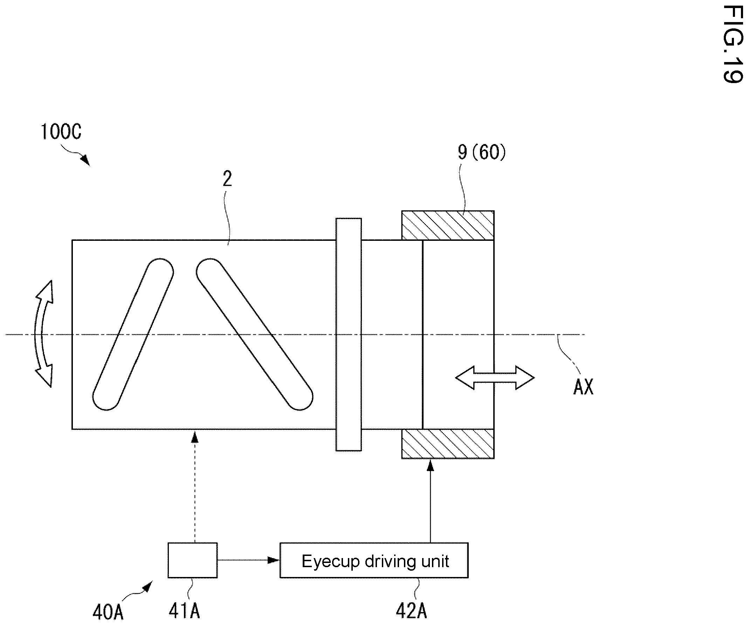

Hereunder, an eyecup structure 100C according to a fourth embodiment will be described. In the embodiment above, the case of configuring the eyecup driver 40 with the restricting groove 13 of the fixed lens barrel 1, the guiding groove 17 of the guiding ring 2, the operation ring 7, the zoom interlocking pin 8, the eyecup ring 9, and the operation pin 10 was described as an example. However, the invention is not limited to this form. Fig. 19 is a diagram showing an example of the eyecup structure 100C according to the fourth embodiment. The eyecup structure 100C shown in Fig. 19 has an eyecup driver 40A. The eyecup driver 40A has a sensor 41A which detects an amount of rotation of the guiding ring 2, and an eyecup driving unit 42A which causes the eyecup ring 9 to move in the optical axis AX direction on the basis of a detection result of the sensor 41A. The eyecup driving unit 42A has a drive source such as an electric motor and a transmitter which transmits a driving force generated by the drive source to the eyecup ring 9. As the transmitter, for example, a ball screw mechanism or a rack-and-pinion mechanism is used.

According to the eyecup structure 100C, when the user rotates the operation ring 7, a rotation amount of the guiding ring 2 is detected by the sensor 41A, and the eyecup ring 9 (the eyecup member 60) can be moved in the optical axis AX direction by means of driving of the eyecup driving unit 42A, according to the detection result of the sensor 41A. The sensor 41A may detect, for example, a position of the front lens holder 3 or the rear lens holder 5 instead of detecting a rotation amount of the guiding ring 2.

### [Fifth Embodiment]

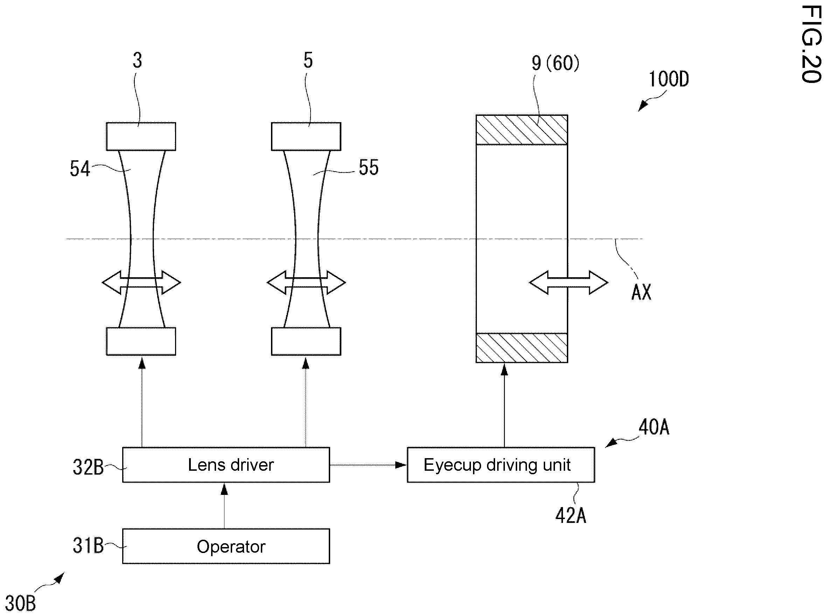

Hereunder, an eyecup structure 100D according to a fifth embodiment will be described. In the embodiment above, the case of configuring the magnification changer 30 with the restricting grooves 11, 12 of the fixed lens barrel 1, the guiding grooves 14, 15 and the hole 16 of the guiding ring 2, the front lens holder 3, the rear lens holder 5, the operation pins 4, 6, the operation ring 7, and the zoom interlocking pin 8 was described as an example. However, the invention is not limited to this form. Fig. 20 is a diagram showing an example of the eyecup structure 100D according to the fifth embodiment. The eyecup structure 100D shown in Fig. 20 has a magnification changer 30B. The eyecup driver 40A is of a configuration similar to that shown in Fig. 19.

The magnification changer 30B has an operation member 31B such as an operation ring, a switch, and a push button, and a lens driver 32B which causes the front lens holder 3 and the rear lens holder 5 to move on the basis of an operation amount or an operation direction of the operation member 31B. The lens driver 32B has a drive source such as an electric motor, and a transmitter which transmits a driving force generated by the drive source to the front lens holder 3 and the rear lens holder 5. As the transmitter, for example, a ball screw mechanism or a rack-and-pinion mechanism is used. The eyecup driver 40A drives the eyecup driving unit 42A based on, for example, a lens driving signal from the lens driver 32B to move the eyecup ring 9 (the eyecup member 60) in the optical axis AX direction.

According to the eyecup structure 100D, when the user operates the operation member 31B, the magnification of a target object image or the magnification of the optical system OS (the illustration thereof is omitted in Fig. 20) can be changed by means of the magnification changer 30B, and in association with this magnification change, the eyecup ring 9 (the eyecup member 60) can be moved in the optical axis AX direction by means of driving of the eyecup driving unit 41A. The user can electrically change the magnification of a target object image or the magnification of the optical system OS and move the eyecup member 60. The eyecup driver 40A is not limited to driving on the basis of a lens driving signal of the lens driver 32B. For example, the position of the front lens holder 3 or the rear lens holder 5 may be detected by a sensor, and driving may be performed in accordance with this sensor detection result.

### [Sixth Embodiment]

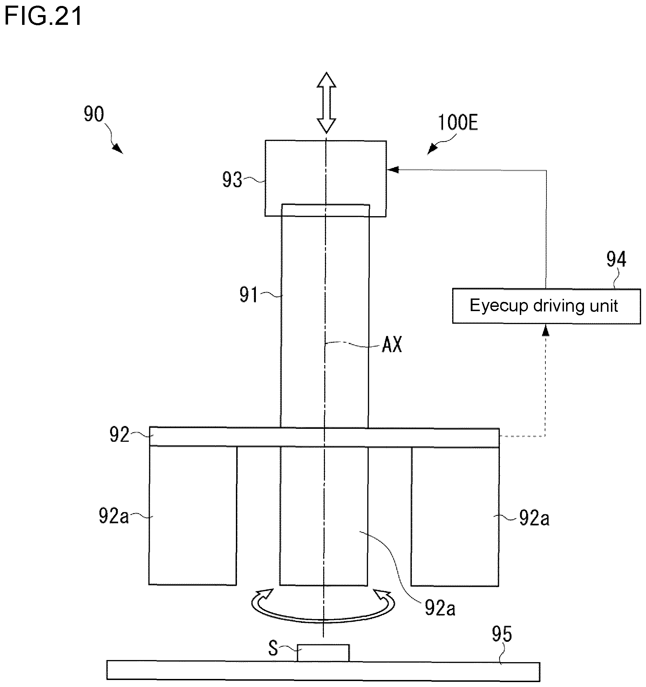

Hereunder, a microscope 90 according to a sixth embodiment will be described. Fig. 21 is a diagram showing an example of the microscope 90 according to the sixth embodiment. As shown in Fig. 21, the microscope 90 includes a lens barrel 91, a revolver 92, an eyecup structure 100E, and a sample stage 95. The lens barrel 91 is provided along the optical axis AX. The revolver 92 has a plurality of objective lenses 92a. By rotating the revolver 92, one of the plurality of objective lenses 92a can be selected and placed on the optical axis AX. The plurality of objective lenses 92a each have a different magnification. Therefore, the revolver 92 is a magnification changer.

The eyecup structure 100E has an eyecup member 93 and an eyecup driver 94. The eyecup driver 94 has, for example, a sensor which detects a rotational position of the revolver 92 or the objective lens 92a arranged on the optical axis AX. When the user rotates the revolver 92 and arranges one objective lens 92a on the optical axis AX, the eyecup member 93 is moved in the optical axis AX direction to a position corresponding to the eye relief length in accordance with the magnification of the objective lens 92a. The eyecup driver 94 has a drive source such as an electric motor and a transmitter which transmits a driving force generated by the drive source to the eyecup member 93. As the transmitter, for example, a ball screw mechanism or a rack-and-pinion mechanism is used. A sample S serving as an observation target is placed on the sample stage 95.

According to the microscope 90, when the user rotates the revolver 92, in association with the rotation of the revolver 92, the eyecup member 93 can be moved, by means of the eyecup structure 100E, in the optical axis AX direction to a position corresponding to the eye relief length in accordance with the magnification of the objective lens 92a. As a result, there is no need for the user to adjust the position of the eyecup member 93 when changing the objective lens 92a, which improves usability for the user.

The embodiments of the present invention have been described above. However, the technical scope of the present invention is not limited to the description of the embodiments. One or more of the requirements described in the above embodiments may be omitted in some cases. One or more of the requirements described in the above embodiments may be combined where appropriate. Furthermore, the contents of all documents cited in the detailed description of the present invention are incorporated herein by reference to the extent permitted by law.

### Description of Reference Signs

- BD, BDL, BDR:: Main body
- AX, AXL, AXR:: Optical axis
- OS, OSL, OSR:: Optical system
- 1, 1A, 1L, 1R:: Fixed lens barrel
- 2, 2L, 2R:: Guiding ring
- 3, 3L, 3R:: Front lens holder
- 4, 6, 10:: Operation pin
- 5, 5L, 5R:: Rear lens holder
- 7:: Operation ring
- 8:: Zoom interlocking pin
- 9, 9L, 9R:: Eyecup ring
- 11, 11A, 12, 13, 13A:: Restricting groove
- 14, 15, 17:: Guiding groove
- 16:: Hole
- 18:: Eye cup
- 30, 30B:: Magnification changer
- 40, 40A, 40B, 94:: Eyecup driver
- 50, 50A:: Monocular (optical instrument)
- 53, 93a:: Eyepiece lens
- 54, 54L, 54R:: Front lens
- 55, 55L, 55R:: Rear lens
- 56:: Fixed lens
- 60, 60L, 60R, 93:: Eyecup member
- 70:: Connector
- 80:: Binoculars (optical instrument)
- 90:: Microscope (optical instrument)
- 100, 100A, 100B, 100C, 100D, 100E:: Eyecup structure

## Claims

1. An optical instrument comprising:
an optical system which forms a target object image;
a magnification changer which changes a magnification of the target object image;
an eyecup member; and
an eyecup driver which causes the eyecup member to move in association with alteration of the magnification of the target object image made by the magnification changer.

2. The optical instrument according to claim 2, wherein the magnification changer changes the magnification of the target object image by causing the optical system to move.

3. The optical instrument according to claim 1 or 2,
wherein the optical system is composed of a plurality of optical lenses, and the magnification changer changes the magnification of the target object image by causing at least one of the plurality of optical lenses to move in an optical axis direction of the optical system.

4. The optical instrument according to claim 3, wherein the plurality of optical lenses includes at least one of an eyepiece lens and a relay lens.

5. The optical instrument according to claim 3 or 4,
wherein the eyecup driver causes the eyecup member to move along the optical axis direction.

6. The optical instrument according to any one of claims 1 to 5,
wherein the eyecup driver causes the eyecup member to move so as to correspond to an eye relief length determined by the magnification changed by the magnification changer.

7. The optical instrument according to claim 5 or 6,
wherein the magnification changer has an operation member capable of rotating about an optical axis to change the magnification of the target object image, and
wherein the eyecup driver has an operation converter which converts a rotating action of the operation member into a linear action which causes the eyecup member to move in the optical axis direction.

8. The optical instrument according to any one of claims 5 to 7,
wherein the magnification changer has: the operation member to change the magnification of the target object image; and a first rotation-linear motion converter which causes at least one of the plurality of optical lenses to move in the optical axis direction, by means of rotation of the operation member about the optical axis direction, and
wherein the eyecup driver has a second rotation-linear motion converter which causes the eyecup member to move in the optical axis direction by means of rotation of the operation member.

9. The optical instrument according to claim 8, wherein the first rotation-linear motion converter has:
a fixed lens barrel including a first restricting groove parallel with the optical axis direction;
a guiding ring which is arranged inside the fixed lens barrel and rotates together with the operation member, and which includes a first guiding groove; and
a ring-shaped lens holder which holds the optical lens and is arranged inside the guiding ring, and which includes a first operation pin penetrating through the first guiding groove and inserted into the first restricting groove, and
wherein rotation of the guiding ring about the optical axis relative to the fixed lens barrel causes the lens holder to move in the optical axis direction, while the first operation pin is guided by the first guiding groove and the first restricting groove.

10. The optical instrument according to claim 9, wherein the second rotation-linear motion converter has:
a second restricting groove provided in the fixed lens barrel in parallel with the optical axis direction;
a second guiding groove provided on the guiding ring; and
a second operation pin which is provided in the eyecup member and which penetrates through the second restricting groove and is inserted into the second guiding groove, and
wherein rotation of the guiding ring relative to the fixed lens barrel causes the eyecup member to move in the optical axis direction, while the second operation pin is guided by the second guiding groove and the second restricting groove.

11. The optical instrument according to claim 10, wherein the first restricting groove and the second restricting groove are provided in the fixed lens barrel as one continuous restricting groove in parallel with the optical axis direction.

12. The optical instrument according to claim 10 or 11,
wherein the first guiding groove and the second guiding groove have different shapes.

13. The optical instrument according to any one of claims 10 to 12,
wherein the second guiding groove includes a linear guiding groove formed in a direction perpendicular to the optical axis direction.

14. The optical instrument according to any one of claims 9 to 13,
wherein the operation member, in the fixed lens barrel, has a third operation pin which penetrates through a third restricting groove provided in a circumferential direction about the optical axis direction, and which is fixed to the guiding ring, and
wherein, within a range of the third restricting groove guiding the third operation pin, the guiding ring can rotate relative to the fixed lens barrel.

15. The optical instrument according to any one of claims 3 to 14,
wherein the eyecup member includes an inner cylindrical body and an outer cylindrical body which can move relative to each other in the optical axis direction.

16. The optical instrument according to claim 15, wherein the inner cylindrical body and the outer cylindrical body are screwed-coupled.

17. Binoculars comprising
a first lens barrel and a second lens barrel which are connected to each other via a coupler and which each include an optical system which forms a target object image, a magnification changer which changes a magnification of the target object image by the movement of the optical system, an eyecup member, and an eyecup driver which causes the eyecup member to move in association with alteration of the magnification of the target object image made by the magnification changer,
wherein at least one of the magnification changers each provided in the first lens barrel and the second lens barrel has an operation member capable of rotating about an optical axis to change the magnification of the target object image, and
wherein the binoculars have a connector which causes the eyecup members of the first lens barrel and the second lens barrel to move while interlocking with each other, on the basis of an operation of changing the magnification of the target object image.

18. The binoculars according to claim 17,
wherein the connector is connected to the magnification changer in each of the first lens barrel and the second lens barrel.

19. The binoculars according to claim 17 or 18, wherein the magnification changer has a first rotation-linear motion converter which causes the optical system to move in the optical axis direction, by means of rotation of the operation member about the optical axis direction,
wherein the eyecup driver has a second rotation-linear motion converter which causes the eyecup member to move in the optical axis direction by means of rotation of the operation member,
wherein the first rotation-linear motion converter has:
a fixed lens barrel;
a guiding ring which is arranged inside the fixed lens barrel and rotates together with the operation member; and
an optical system holder which holds the optical system and is arranged inside the guiding ring,
wherein the connector is connected to the guiding ring in each of the first lens barrel and the second lens barrel, and
wherein rotation of the guiding ring about the optical axis direction relative to the fixed lens barrel causes the optical system holder in each of the first lens barrel and the second lens barrel to move in the optical axis direction, and causes the eyecup members of the first lens barrel and the second lens barrel to move in the optical axis direction while interlocking with each other.

20. The binoculars according to claim 19,
wherein the connector is a metal connector formed in a string or strip shape, and
wherein both of lengthwise ends of the connector are respectively wound along and fixed on the outer circumference of the guiding ring of the first lens barrel and the second lens barrel.

21. Binoculars comprising:
a first lens barrel and a second lens barrel which are connected to each other via a coupler and which each include an optical system which forms a target object image, an eyecup member, and an eyecup driver which causes the eyecup member to move in association with alteration of a magnification of the target object image made by the movement of the optical system;
a magnification changer which is provided between the first lens barrel and the second lens barrel and has an operation member capable of rotating about an optical axis of the optical system to change the magnification of the target object image; and
a connector which causes the eyecup members of the first lens barrel and the second lens barrel to move while interlocking with each other, on the basis of an operation of changing the magnification of the target object image.

22. An eyecup structure comprising:
an eyecup member; and
an eyecup driver which causes the eyecup member to move in association with alteration of a magnification of a target object image made by a magnification changer.

23. An eyecup structure comprising:
an eyecup member;
a magnification changer which changes a magnification of a target object image; and
an eyecup driver which causes the eyecup member to move in association with alteration of the magnification of the target object image made by the magnification changer.

24. A method for moving an eyecup member, the method comprising
causing the eyecup member to move in association with alteration of a magnification of a target object image.

25. A method for moving an eyecup member, the method comprising
causing the eyecup member to move in association with alteration of a magnification of an optical system.

26. A method for moving an eyecup member, the method comprising steps of:
specifying a magnification of a target object image;
determining a position of an eye cup, on the basis of the specified magnification; and
causing the eyecup to move to the determined position.
